(19) **Europäisches Patentamt**

**European Patent Office**

**Office européen des brevets**

(11) **EP 1 563 206 B1**

(12) **FASCICULE DE BREVET EUROPEEN**

(45) Date de publication et mention
de la délivrance du brevet:
**21.06.2006 Bulletin 2006/25**

(51) Int Cl.:
*F16H 61/02* (2006.01)        *F16H 59/66* (2006.01)
*F16H 59/46* (2006.01)

(21) Numéro de dépôt: **03786017.8**

(22) Date de dépôt: **18.11.2003**

(86) Numéro de dépôt international:
**PCT/FR2003/003411**

(87) Numéro de publication internationale:
**WO 2004/048818 (10.06.2004 Gazette 2004/24)**

(54) **PROCEDE DE COMMANDE D'UNE TRANSMISSION AUTOMATIQUE D'UN VEHICULE EN SITUATION DE DESCENTE**

STEUERUNGSVERFAHREN FÜR EIN AUTOMATISCHES GETRIEBE WÄHREND EINER ABFAHRT

METHOD FOR CONTROLLING AUTOMATIC TRANSMISSION OF A VEHICLE ON A DOWNHILL SLOPE

(84) Etats contractants désignés:
**AT BE BG CH CY CZ DE DK EE ES FI GB GR HU
IE IT LI LU MC NL PT RO SE SI SK TR**

(30) Priorité: **21.11.2002 FR 0214560**

(43) Date de publication de la demande:
**17.08.2005 Bulletin 2005/33**

(73) Titulaire: **Renault s.a.s.**
**92100 Boulogne Billancourt (FR)**

(72) Inventeur: **TAFFIN, Christian**
**F-78320 Le Mesnil Saint Denis (FR)**

(56) Documents cités:
**EP-A- 0 314 067          EP-A- 0 972 971
EP-A- 1 041 314          US-A- 4 648 291
US-A- 5 765 117          US-A1- 2002 082 764**

**Description**

L'invention concerne un procédé de commande d'une transmission automatique d'un véhicule en situation de descente.

Les véhicules équipés de transmission automatique, en particulier de transmission à commande hydraulique, ont longtemps présenté un défaut apparaissant dans les situations de descente. En effet, lorsque le conducteur relève le pied de l'accélérateur, le véhicule adopte le rapport de transmission le plus long, ou désengage tout rapport de transmission. Il s'ensuit que le véhicule ne peut pas bénéficier du frein moteur en situation de descente pour réguler la vitesse du véhicule.

Pour remédier à ce défaut, il a été proposé, dans le document générique EP 1 041 314 A, un procédé de commande d'une transmission automatique selon lequel la pente dans laquelle le véhicule circule est détectée, auquel cas une loi spécifique de commande du véhicule est adoptée. Cette loi, mémorisée sous la forme d'une cartographie, modifie le choix des rapports de transmission pour procurer du frein moteur. Elle établit une correspondance entre la vitesse du véhicule, la puissance demandée et le rapport de transmission.

Cependant, cette loi de passage n'est adaptée qu'à une situation de descente moyenne. Dans le cas de forte pente, où il serait nécessaire d'avoir un très fort frein moteur, le rapport choisi est en général trop long pour procurer ce frein moteur. De même, dans le cas de pente très faible, le frein moteur est trop important et le véhicule ralentit.

C'est donc un objectif de l'invention de fournir un procédé de commande d'une transmission automatique d'un véhicule s'adaptant à toutes les situations de descente dans lesquelles le véhicule peut se trouver.

Avec cet objectif en vue, l'invention a pour objet un procédé de commande d'une transmission automatique d'un véhicule comportant un moteur entraînant la transmission, procédé dans lequel on détecte une situation de descente du véhicule, et on choisit un rapport de transmission pour que le moteur absorbe de l'énergie, caractérisé en ce qu'on mémorise une vitesse longitudinale d'entrée en descente lorsque le véhicule entre dans une situation de descente, et, tant que le véhicule est en situation de descente, on compare la vitesse actuelle du véhicule avec la vitesse d'entrée en descente de telle sorte que si la vitesse actuelle dépasse la vitesse d'entrée en descente d'un écart prédéterminé, alors on commande la transmission pour déclencher une rétrogradation.

Ainsi, grâce à l'invention, le rapport de transmission n'est pas choisi selon une loi générale, mais explicitement en fonction de la situation du véhicule, en déclenchant une rétrogradation d'après l'analyse de cette situation. En effet, le besoin de la rétrogradation apparaît lorsque le véhicule, en situation de descente, accélère et dépasse sensiblement la vitesse d'entrée dans la descente.

Dans un mode de réalisation particulier, le véhicule est équipé d'un système de régulation de la vitesse.

De préférence, la situation de descente est détectée si la pente est supérieure à un seuil de pente prédéterminé, si la demande de puissance du moteur est inférieure à un seuil de puissance prédéterminé, et en absence de freinage. La présence de freinage correspond normalement à l'intention du conducteur de ralentir le véhicule, voire de l'arrêter, et ne correspond donc pas à la situation faisant l'objet de l'invention. La situation de descente correspond donc à la présence d'une pente dans laquelle le véhicule circule, et l'intention du conducteur de ne pas accélérer, traduite par une demande de puissance inférieure à un seuil. Cette demande de puissance peut être évaluée par la position de la pédale d'accélérateur, par exemple par la position de la pédale complètement relâchée. Dans le cas d'un véhicule équipé d'un système de régulation de vitesse, la demande de puissance est mesurée au niveau de la commande du moteur, avec un équivalent de la position de la pédale d'accélérateur. Ce peut être la position du papillon dans le cas d'un moteur à allumage commandé, ou la quantité de carburant injectée dans le cas d'un moteur Diesel ou une consigne de couple à délivrer par le moteur.

De préférence, le procédé comporte une étape de test supplémentaire vérifiant que, avant de déclencher une rétrogradation, la capacité d'absorption d'énergie du moteur est inférieure à un seuil de puissance prédéterminé. Avant de déclencher une rétrogradation, le procédé vérifie que le moteur n'est pas dans une situation où il peut absorber suffisamment d'énergie. Ainsi, la rétrogradation n'est déclenchée que si le dépassement de vitesse est dû à l'incapacité du moteur à retenir le véhicule. Si une rétrogradation a été déclenchée précédemment, on évite une nouvelle rétrogradation en laissant au véhicule le temps de ralentir et de se rapprocher de la vitesse d'entrée en descente.

De manière particulière, la capacité d'absorption du moteur est déterminée par le régime du moteur. En effet, il est aisé de relier la capacité d'absorption de puissance du moteur avec son régime de rotation lorsque la puissance demandée est nulle (papillon fermé ou pas de carburant injecté).

De manière avantageuse, le seuil de puissance de la capacité d'absorption est une fonction croissante de la pente. Plus la pente est importante, et plus le seuil de puissance prédéterminé est élevé, ce qui entraîne une rétrogradation dès que le frein moteur n'est plus suffisant pour éviter un emballement du véhicule. Dans le cas où la capacité d'absorption est déterminée par le régime moteur, la rétrogradation sera déclenchée pour un seuil de régime moteur s'accroissant en fonction de la pente. A titre d'exemple, pour un moteur à allumage commandé, le seuil prédéterminé est sensiblement de 1800 à 2000 tr/min (min$^{-1}$) pour une pente inférieure à 5%, 2500 à 3000 tr/min pour une pente de 5 à 10 %, et de 3500 à 4000 tr/min pour une pente supérieure à 10 %. Dans le cas d'un moteur Diesel, ces seuils sont plus faibles.

Concernant l'écart de vitesse prédéterminé, il est compris de préférence entre 5 et 10 km/h. Dans le cas d'un véhicule équipé d'un régulateur de vitesse, l'écart de vitesse prédéterminé est plutôt dans la fourchette basse, et plutôt dans la fourchette haute dans le cas contraire. L'écart de vitesse prédéterminé- peut- également dépendre du rapport de transmission actuel.

L'invention a aussi pour objet un système de commande d'une transmission automatique d'un véhicule comportant un moteur entraînant la transmission, le système comportant des moyens de détermination d'une situation de descente du véhicule, et des moyens de choix d'un rapport de transmission pour que le moteur absorbe de l'énergie, caractérisé en ce qu'il comporte en outre des moyens de mesure et de mémorisation de la vitesse longitudinale d'entrée en descente, mesurant ladite vitesse et la mémorisant lorsque le véhicule entre dans une situation de descente, des moyens de comparaison de la vitesse actuelle du véhicule avec la vitesse d'entrée en descente, et des moyens de commande de la transmission pour déclencher une rétrogradation si la vitesse actuelle dépasse la vitesse d'entrée en descente mémorisée d'un écart prédéterminé.

L'invention a encore pour objet un véhicule comportant un moteur et une transmission automatique, caractérisé en ce qu'il comporte le système de commande précédent.

L'invention sera mieux comprise et d'autres particularités et avantages apparaîtront à la lecture de la description qui va suivre, la description faisant référence aux dessins annexés parmi lesquels :

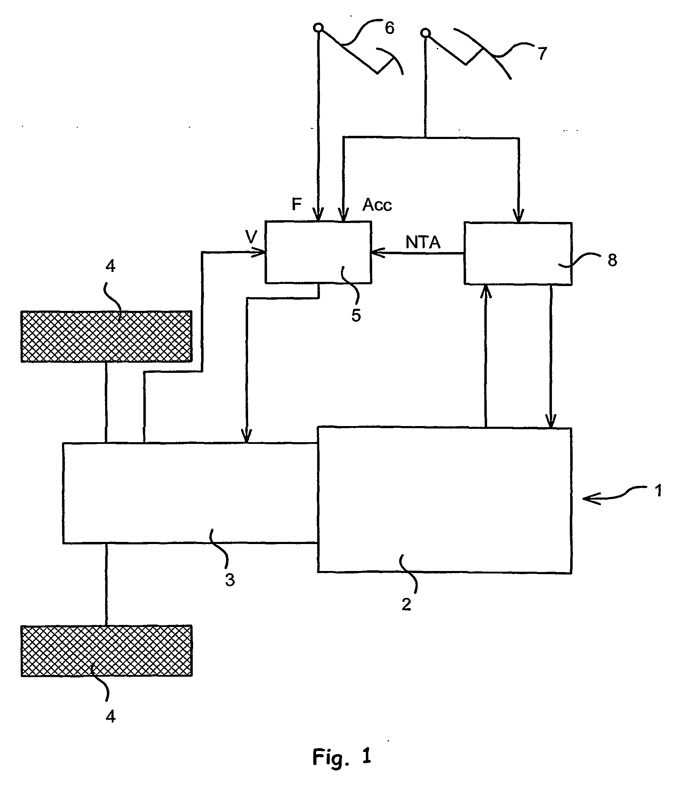

- la figure 1 est une vue schématique d'un groupe motopropulseur mettant en oeuvre un procédé conforme à l'invention ;

- la figure 2 est un organigramme du procédé selon l'invention.

Un véhicule dans lequel le procédé selon l'invention est mis en oeuvre comporte un groupe motopropulseur 1 composé d'un moteur 2 et d'une transmission automatique 3. Le moteur 2 est par exemple un moteur thermique du type Diesel ou à allumage commandé fournissant une puissance à la transmission 3 puis à des roues 4. La transmission 3 est par exemple une boîte automatique à trains épicycloïdaux, une boîte de vitesses robotisée ou un variateur de vitesse à poulies. Une unité électronique 5 de commande permet de commander la transmission 3 soit en déterminant directement le rapport de transmission à utiliser, soit en interférant avec un système autonome de commande de la transmission 3, par exemple un système hydraulique.

L'unité électronique 5 met en oeuvre le procédé selon l'invention, par exemple sous la forme d'un logiciel informatique. Elle reçoit des informations sur l'état du véhicule, notamment la position F d'une pédale de frein 6, la position Acc d'une pédale d'accélérateur 7, la vitesse V du véhicule, le régime moteur NTA et des informations utiles pour la détermination de la pente P, ou éventuellement directement une information de la pente P. Le régime moteur NTA est transmis par exemple par un contrôleur 8 du moteur.

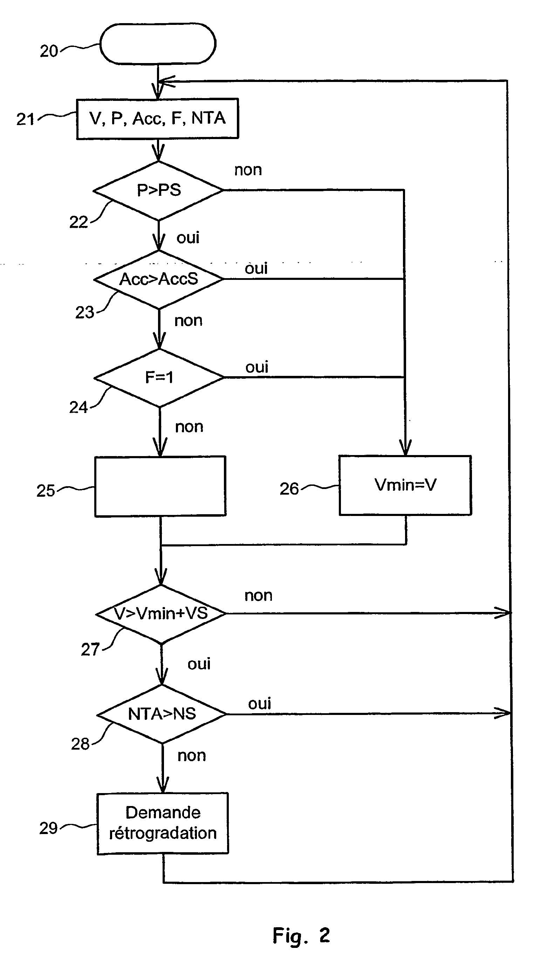

En se référant à la figure 2, après une étape d'initialisation 20, l'unité effectue à l'étape 21 une acquisition des données V, P, Acc, F et NTA citées précédemment. A l'étape de test 22, la pente P est comparée à un seuil de pente PS prédéterminé. Si la pente P est supérieure au seuil de pente PS, on considère que le véhicule est engagé dans une pente descendante, et on passe à l'étape de test 23. Sinon, on passe à l'étape 26.

A l'étape de test 23, la position de l'accélérateur Acc est comparée à un seuil de puissance prédéterminé, traduit sous la forme d'un seuil de position de l'accélérateur AccS. Si la position Acc dépasse le seuil de position Accs, on passe à l'étape 26. Sinon, on considère que la pédale d'accélérateur est relevée et on passe à l'étape de test 24 où la position de la pédale de frein est vérifiée. Si les freins sont actionnés, la position F vaut alors 1, et on passe à l'étape 26. Sinon, on passe à l'étape 25.

L'étape 25 est atteinte lorsque le véhicule est en situation de descente, où la vitesse d'entrée dans la descente Vmin est conservée. Par contre, à l'étape 26, quand le véhicule n'est pas dans une situation de descente, la variable Vmin est actualisée avec la vitesse courante V du véhicule.

A l'issue de l'une ou l'autre de ces étapes 25, 26, l'étape de test 27 est exécutée. A cette étape 27, la vitesse V est comparée à la vitesse d'entrée dans la descente Vmin. Si la vitesse V n'est pas supérieure à la vitesse d'entrée dans la descente Vmin augmentée d'un écart de vitesse VS, cet écart étant positif, alors l'exécution du programme est renvoyée à l'étape 21. Cette situation correspond à un cas où la vitesse du véhicule ne s'est pas trop écartée de la vitesse d'entrée dans la descente Vmin. C'est le cas en particulier lorsque l'étape 26 vient d'être exécutée, car la condition énoncée est toujours vérifiée. Dans le cas contraire, c'est-à-dire si la vitesse V est supérieure à la vitesse d'entrée dans la descente Vmin augmentée d'un écart de vitesse VS, alors l'étape de test 28 est exécutée.

Lors de l'étape de test 28, le régime NTA de rotation du moteur est comparé à un seuil de régime NS. Si le régime NTA est supérieur au seuil de régime NS, alors le moteur tourne déjà rapidement et absorbe une puissance supérieure au seuil de puissance prédéterminé et correspondant au régime de rotation NS. Une rétrogradation n'est pas autorisée et l'exécution du programme est renvoyée à l'étape 21. Dans le cas contraire, l'étape 29 est exécutée dans laquelle un ordre de rétrogradation est transmis à la transmission pour raccourcir le rapport de transmission. Pour une transmission à variation continue de rapport, la demande de rétrogradation peut prendre la forme d'une demande d'augmentation du régime d'entrée de boîte. L'exécution du programme est ensuite renvoyée vers l'étape 21. Comme indiqué précédemment dans l'exposé de l'invention, le seuil NS est une fonction de la pente.

L'évaluation de la pente P peut être réalisée selon un procédé tel qu'exposé par exemple dans le document EP 1 041 314. Selon ce procédé, une accélération calculée yc est évaluée et comparée à l'accélération réelle $\gamma m$. L'évaluation de l'accélération calculée utilise la formule :

$$\gamma_C = rap(N).C_{moteur} / Rayon.Masse - 1/2\, \rho.\, Scx.V_{veh} / Masse.g.kr,$$

expression dans laquelle :

- rap(N) est le rapport de démultiplication rapporté à la roue sur le rapport N,

- $C_{moteur}$ est le couple moteur déterminé par l'unité de contrôle du moteur en fonction par exemple de la position de la pédale d'accélérateur et du régime moteur,

- Rayon est le rayon de la roue,

- Masse est la masse à vide du véhicule avec deux personnes à bord,

- $\rho$ est la densité de l'air,

- Scx est le coefficient de pénétration dans l'air du véhicule,

- g est la pesanteur (g = 9,81 m/s2), et

- kr est la résistance au roulement.

La pente P suivie par le véhicule (positive dans le cas d'une descente) est alors calculée selon la formule :

$$P = (\gamma m - \gamma c)/g$$

L'évaluation est réalisée par l'unité 5 à partir d'informations reçues, ou par un autre système du véhicule qui transmet directement la valeur de P à l'unité 5. Les informations reçues proviennent par exemple de capteurs non représentés, du contrôleur 8 du moteur ou d'un autre système du véhicule par un éventuel réseau numérique de bord. Le document EP 1 106 872 expose également la même méthode. D'autres - méthodes d'évaluation de la pente peuvent être utilisées.

**Revendications**

**1.** Procédé de commande d'une transmission (3) automatique d'un véhicule comportant un moteur (2) entraînant la transmission (3), procédé dans lequel :

   - on détecte une situation de descente du véhicule, et ;
   - on choisit un rapport de transmission pour que le moteur (3) absorbe de l'énergie,

   **caractérisé en ce qu'**on mémorise une vitesse longitudinale d'entrée en descente (Vmin) lorsque le véhicule entre dans une situation de descente, et,

   - tant que le véhicule est en situation de descente, on compare la vitesse actuelle (V) du véhicule avec la vitesse d'entrée en descente (Vmin) de telle sorte que :

- si la vitesse actuelle (V) dépasse la vitesse d'entrée en descente (Vmin) d'un écart prédéterminé (VS), alors on commande la transmission pour déclencher une rétrogradation.

2. Procédé de commande selon la revendication 1, **caractérisé en ce qu'**on détecte la situation de descente si la pente (P) est supérieure à un seuil de pente prédéterminé (PS), si la demande de puissance du moteur (Acc) est inférieure à un seuil de puissance prédéterminé (AccS), et en l'absence de freinage.

3. Procédé de commande selon la revendication 1, **caractérisé en ce qu'**il comporte une étape de test supplémentaire (28) vérifiant que, avant de déclencher une rétrogradation, la capacité d'absorption d'énergie du moteur est inférieure à un seuil de puissance prédéterminé.

4. Procédé de commande selon la revendication 3, **caractérisé en ce que** la capacité d'absorption du moteur est déterminée par le régime du moteur (NTA).

5. Procédé de commande selon la revendication 3, **caractérisé en ce que** le seuil de puissance de la capacité d'absorption (NS) est une fonction croissante de la pente (P).

6. Procédé de commande selon la revendication 1, **caractérisé en ce que** l'écart de vitesse prédéterminé (VS) est compris entre 5 et 10 km/h.

7. Procédé de commande selon la revendication 1, **caractérisé en ce que** le véhicule est équipé d'un système de régulation de la vitesse.

8. Système de commande d'une transmission automatique (3) d'un véhicule comportant un moteur (2) entraînant la transmission (3), le système comportant :

   - des moyens de détermination d'une situation de descente du véhicule, et
   - des moyens de choix d'un rapport de transmission pour que le moteur absorbe de l'énergie,

   **caractérisé en ce qu'**il comporte en outre :

   - des moyens de mesure et mémorisation de la vitesse longitudinale d'entrée en descente (Vmin) lorsque le véhicule entre dans une situation de descente,
   - des moyens de comparaison de la vitesse actuelle (V) du véhicule avec la vitesse d'entrée en descente (Vmin), et ;
   - des moyens de commande de la transmission pour déclencher une rétrogradation si la vitesse actuelle (V) dépasse la vitesse d'entrée en descente (Vmin) d'un écart prédéterminé (VS).

9. Véhicule comportant un moteur et une transmission automatique, **caractérisé en ce qu'**il comporte le système de commande de la transmission automatique selon la revendication 8.

**Claims**

1. A method of controlling an automatic transmission (3) of a vehicle comprising an engine (2) driving the transmission (3), in which method:

   - a descent situation of the vehicle is detected, and
   - a transmission ratio is selected so that the engine (3) absorbs energy,
   **characterised by** storing a longitudinal descent entry speed (Vmin) when the vehicle enters a descent situation, and
   - as long as the vehicle is in a descent situation the current speed (V) of the vehicle is compared to the descent entry speed (Vmin) in such a way that:
   - if the current speed (V) exceeds the descent entry speed (Vmin) by a predetermined difference (VS) then the transmission is operated to trigger a downshift.

2. A control method according to claim 1 **characterised in that** the descent situation is detected if the gradient (P) is greater than a predetermined gradient threshold (PS), if the power demand of the engine (Acc) is lower than a predetermined power threshold (AceS) and in the absence of braking.

3. A control method according to claim 1 **characterised in that** it comprises an additional test step (28) checking that, before triggering a downshift, the energy absorption capacity of the engine is lower than a predetermined power threshold.

4. A control method according to claim 3 **characterised in that** the absorption capacity of the engine is determined by the operating state of the engine (NTA).

5. A control method according to claim 3 **characterised in that** the power threshold of the absorption capacity (NS) is an increasing function of the gradient (P).

6. A control method according to claim 1 **characterised in that** the predetermined speed difference (VS) is between 5 and 10 kph.

7. A control method according to claim 1 **characterised in that** the vehicle is equipped with a speed regulating System.

8. A system for controlling au automatic transmission (3) of a vehicle comprising an engine (2) driving the transmission (3), the system comprising:

- means for determining a descent situation of the vehicle, and
- means for choosing a transmission ratio so that the engine absorbs energy,
**characterised in that** it further comprises:
- means for measuring and storing the longitudinal descent entry speed (Vmin) when the vehicle enters a descent situation,
- means for comparing the current speed (V) of the vehicle to the descent entry speed (Vmin), and
- means for controlling the transmission to trigger a downshift if the cuneat speed (V) exceeds the descent entry speed (Vmin) by a predetermined difference (VS).

9. A vehicle comprisiag an engine and an automatic transmission **characterised in that** it comprises the system for controlling the automatic transmission according to claim 8.

**Patentansprüche**

1. Verfahren zur Steuerung eines automatischen Getriebes (3) eines Fahrzeugs, welches einen Motor (2) aufweist, der das Getriebe (3) antreibt, in welchem:

- man eine Situation einer Abwärtsbewegung des Fahrzeugs erfasst und;
- man einen Getriebegang auswählt, damit der Motor (3) Energie aufnimmt,
**dadurch gekennzeichnet, dass** man eine longitudinale Eingangsgeschwindigkeit bei Abwärtsbewegung (Vmin) speichert, wenn das Fahrzeug in eine Situation einer Abwärtsbewegung eintritt, und,
- solange das Fahrzeug in einer Situation einer Abwärtsbewegung ist, man die aktuelle Geschwindigkeit (V) des Fahrzeugs mit der Eingangsgeschwindigkeit bei Abwärtsbewegung (Vmin) derart vergleicht, dass:
- wenn die aktuelle Geschwindigkeit (V) die Eingangsgeschwindigkeit bei Abwärtsbewegung (Vmin) um einen vorherbestimmten Abstand (VS) überschreitet, man sodann das Getriebe zum Auslösen eines Zurückschaltens steuert.

2. Steuerungsverfahren nach Anspruch 1, **dadurch gekennzeichnet, dass** man die Situation einer Abwärtsbewegung erfasst, wenn das Gefälle (P) größer als eine vorherbestimmte Schwelle des Gefälles (PS) ist, wenn die Leistungsnachfrage des Motors (Acc) niedriger als eine vorherbestimmte Leistungsschwelle (AccS) ist und bei Nichtvorhandensein einer Bremsung.

3. Steuerungsverfahren nach Anspruch 1, **dadurch gekennzeichnet, dass** es einen zusätzlichen Testschritt (28) aufweist, welcher überprüft, ob vor dem Auslösen eines Zurückschaltens die Aufnahmekapazität für Energie des Motors niedriger als eine vorherbestimmte Leistungsschwelle ist.

4. Steuerungsverfahren nach Anspruch 3, **dadurch gekennzeichnet, dass** die Aufnahmekapazität des Motors durch die Motordrehzahl (NTA) bestimmt wird.

5. Steuerungsverfahren nach Anspruch 3, **dadurch gekennzeichnet, dass** die Leistungsschwelle der Aufriahmekapazität (NS) eine steigende Funktion von dem Gefälle (P) ist.

6. Steuerungsverfahren nach Anspruch 1, **dadurch gekennzeichnet, dass** der vorherbestimmte Geschwindigkeitsabstand (VS) zwischen 5 und 10 km/h liegt.

7. Steuerungsverfahren nach Anspruch 1, **dadurch gekennzeichnet, dass** das Fahrzeug mit einem System zur Regelung der Geschwindigkeit ausgestattet ist.

8. Steuerungssystem eines automatischen Getriebes (3) eines Fahrzeugs, welches einen Motor (2) aufweist, der das Getriebe (3) antreibt, wobei das System aufweist:

   - Mittel zur Bestimmung einer Situation einer Abwärtsbewegung des Fahrzeugs und
   - Mittel zur Auswahl eines Getriebegangs, damit der Motor Energie aufnimmt,
   **dadurch gekennzeichnet, dass** es des Weiteren aufweist:
   - Mittel zum Messen und Speichern der longitudinalen Eingangsgeschwindigkeit bei Abwärtsbewegung (Vmin), wenn das Fahrzeug in eine Situation einer Abwärtsbewegung eintritt,
   - Mittel zum Verglcichen der aktuellen Geschwindigkeit (V) des Fahrzeugs mit der Eingangsgeschwindigkeit bei Abwärtsbewegung (Vmin) und
   - Mittel zur Steuerung des Getriebes zum Auslösen eines Zurückschaltens, wenn die aktuelle Geschwindigkeit (V) die Eingangsgeschwindigkeit bei Abwärtsbewegung (Vmin) um einen vorherbestimmten Abstand (VS) überschreitet.

9. Fahrzeug, welches einen Motor und ein automatisches Getriebe aufweist, **dadurch gekennzeichnet, dass** es das Steuerungssystem des automatischen Getriebes gemäß Anspruch 8 aufweist.

Fig. 1

20

21 — V, P, Acc, F, NTA

22 — P>PS — non

oui

23 — Acc>AccS — oui

non

24 — F=1 — oui

non

25 — 

26 — Vmin=V

27 — V>Vmin+VS — non

oui

28 — NTA>NS — oui

non

29 — Demande rétrogradation

Fig. 2